(19) Europäisches Patentamt
European Patent Office
Office européen des brevets

(11) **EP 2 011 213 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(51) Int Cl.:
*H02J 9/06* *(2006.01)*     *H05B 33/08* *(2006.01)*
*H02J 9/02* *(2006.01)*

(21) Anmeldenummer: **07702900.7**

(22) Anmeldetag: **19.01.2007**

(86) Internationale Anmeldenummer:
**PCT/EP2007/000471**

(87) Internationale Veröffentlichungsnummer:
**WO 2007/121798 (01.11.2007 Gazette 2007/44)**

(54) **LED-TREIBERSCHALTUNG**

LED DRIVER CIRCUIT

CIRCUIT D'EXCITATION DE DIODE ÉLECTROLUMINESCENTE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006 DE 102006018531**
            **03.07.2006 DE 102006030655**

(43) Veröffentlichungstag der Anmeldung:
**07.01.2009 Patentblatt 2009/02**

(60) Teilanmeldung:
**10169401.6 / 2 234 240**
**11154704.8 / 2 323 240**

(73) Patentinhaber: **Tridonic GmbH & Co KG**
**6851 Dornbirn (AT)**

(72) Erfinder:
• **STEVENS, Frederick**
**Spennymoor**
**Co Durham, DL16 7LE (GB)**

• **WALLHEAD, Geoff**
**Newton Aycliffe**
**Co Durham, DL5 5HL (GB)**
• **ROHNER, Daniel**
**1220 Wien (AT)**
• **MAIR, Alexander**
**1220 Wien (AT)**

(74) Vertreter: **Rupp, Christian**
**Mitscherlich & Partner**
**Patent- und Rechtsanwälte**
**Sonnenstraße 33**
**80331 München (DE)**

(56) Entgegenhaltungen:
**EP-A- 1 274 286**     **EP-A1- 1 202 428**
**EP-A2- 0 948 241**     **GB-A- 2 258 571**
**US-A- 5 172 009**     **US-A1- 2005 001 562**
**US-B2- 6 858 994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 011 213 B1

**Beschreibung**

Die vorliegende Erfindung bezieht sich auf Schaltungen zum Betrieb von Leuchtdioden.

Auch wenn in der vorliegenden Beschreibung die Erfindung bezugnehmend auf Notlichtgeräte mit LEDs beschrieben werden wird, so ist zu verstehen, dass sich die Erfindung ganz allgemein auf LED-Betriebsschaltungen bezieht.

Notlichtgeräte weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Schaltungen zum Betreiben LEDs sind z.B. aus GB 2 258 571 A und US 6,858,994 B2 bekannt.

Der vorliegenden Erfindung liegt nunmehr die Aufgabe zugrunde, eine Schaltung zum Betrieb von LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Die Erfindung schlägt vor eine Schaltung zum Betreiben wenigstens einer LED, welche die Merkmale des Anspruchs 1 aufweist.

Die Steuereinheit kann die Schaltfrequenz und/oder das Tastverhältnis abhängig wenigstens von dem erfassten zeitlichen Mittelwert des Stroms durch die LED einstellen.

Zum Dimmen der LED kann die Steuereinheit der hochfrequenten Taktung des Schalters eine im Vergleich dazu niederfrequente Modulation überlagern.

Die niederfrequente Modulation kann eine PWM-Modulation sein.

Die Treiberschaltung kann ausgehend von einer Batterie, ggf. assistiert von einer Netzspannung versorgt sein oder rein durch Netzspannung versorgt sein.

Es kann vorgesehen sein eine Batterieentladestrom-Erfassungseinheit, die mit der Steuereinheit funktionell verbinden ist, wobei zur Regelung des Batterieentladestroms der Strom durch die LED abhängig von dem erfassten Batterieentladestrom einstellbar ist.

Die Batterie kann mit einer mit Netzspannung versorgte Ladeschaltung verbunden sein.

Die Treiberschaltung kann die LED dimmen, wenn der Mittelwert der Netzspannung unter einen Schwellenwert absinkt.

Die Ladeschaltung kann einen Flyback-Konverter aufweisen.

Der Flyback-Konverter kann gepulst angesteuert sein, wenn der Mittelwert der Netzspannung unter einen Schwellenwert absinkt.

Es kann eine Batteriespannung-Erfassungsschaltung vorgesehen sein.

Der Strom durch die LED kann abhängig von einem Ausgangssignal der Batteriespannung-Erfassungsschaltung einstellbar sein.

Der Batterieladestrom kann erfasst und ggf. geregelt werden.

Die Steuereinheit kann die LED-Spannung erfassen.

Die Steuereinheit kann bei Inbetriebnahme eine Testmessung elektrischer Parameter ausführen, um herauszufinden, ob eine bzw. welche LED an die Treiberschaltung angeschlossen ist.

Die Steuereinheit kann den Betriebsstrom durch die LED abhängig von dem Ergebnis der Testmessung einstellen.

Die Testmessung kann in dem Anlegen einer verhältnismässig kleinen Spannung durch entsprechende Ansteuerung der Treiberschaltung und dem Messen des sich ergebenden LED-Stroms bestehen.

Die Steuereinheit kann bei Inbetriebnahme die LED-Spannung, durch entsprechende Ansteuerung des Schalters der Treiberschaltung, von einem niedrigen Wert aus zu einem stationären Betriebswert erhöhen.

Die Erfindung schlägt auch ein Verfahren zur Ermittlung des Stroms durch wenigstens eine LED vor, welches die Merkmale des Anspruchs 20 aufweist.

Nachfolgend soll die Erfindung anhand der beiliegenden Zeichnung näher erläutert werden. Es zeigen:

Fig. 1     schematisch das Schaltbild eines ersten Beispiels eines Notlichtgeräts;

Fig. 2     ein zweites Beispiel eines Notlichtgeräts;

Fig. 3     eine Grafik zur Ermittlung der Netzversorgungsspannung auf Basis von an der Ausgangsseite der Ladeschaltung gemessenen Betriebsparametern,

Fig. 4     eine weitere Grafik zur Ermittlung der Sekundärleistung der Ladeschaltung, welche zur indirekten Bestimmung der Lichtquellenleistung berücksichtigt wird,

Fig. 5 eine Illustration einer erfindungsgemässen Batterieschaltung,

Fig. 6 eine erfindungsgemässe LED-Treiberschaltung, und

Fig. 7 die Ansteuerung des Treiberschalters sowie den sich ergebenden Diodenstrom.

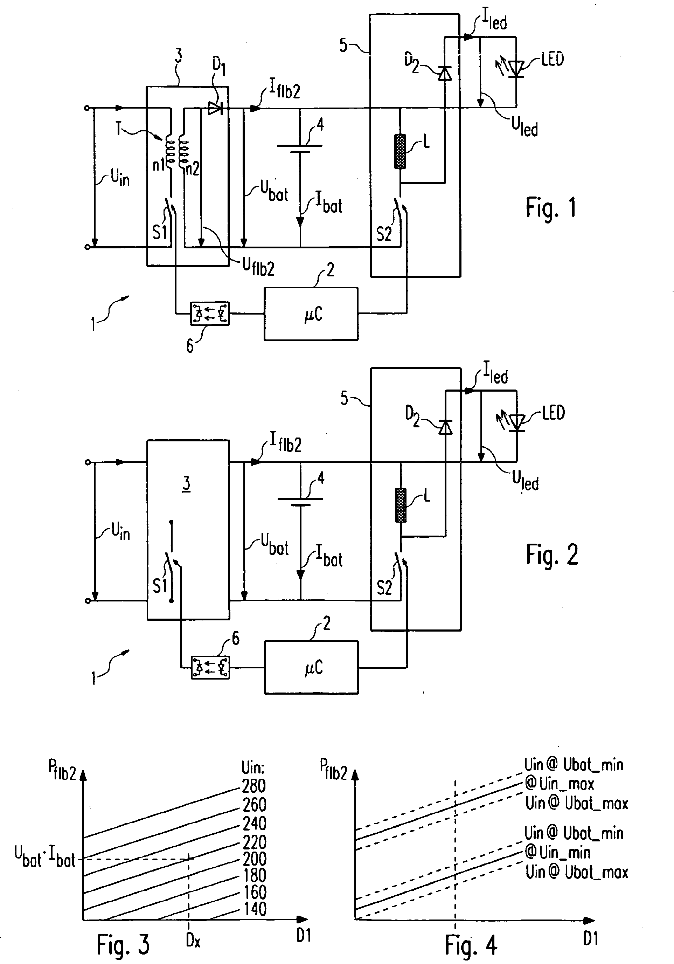

Das in Fig. 1 in vereinfachter Weise dargestellte und allgemein mit dem Bezugszeichen 1 versehene Notlichtgerät ist im dargestellten Beispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Beispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Duty-cycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings mit Nachteilen verbunden ist.

Dabei kann auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Beispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein zweites, etwas allgemeineres Beispiel eines Notlichtgeräts ist in Fig. 2 dargestellt. Dieses entspricht in seinem Aufbau im wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Beispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen.

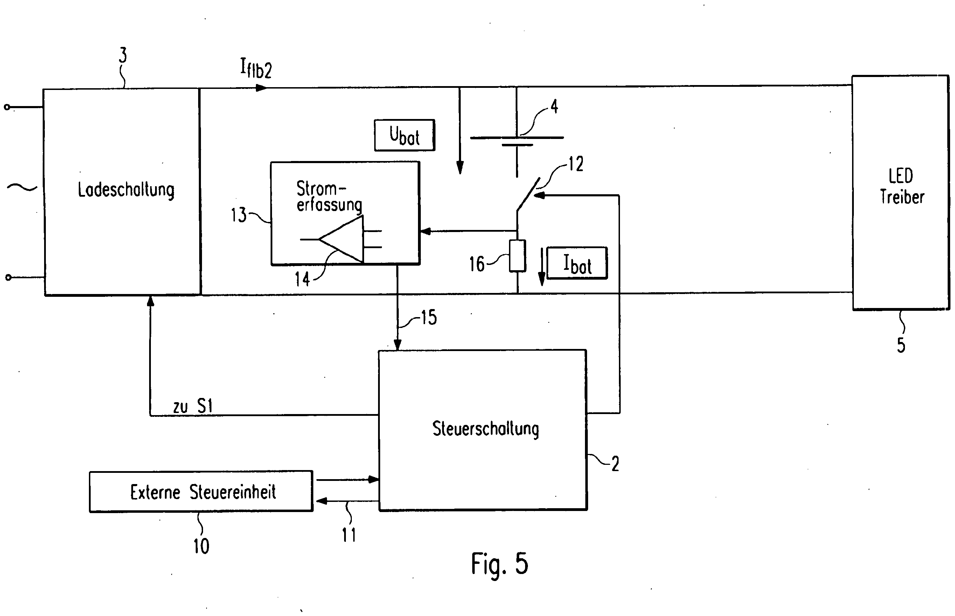

Bezug nehmend auf Figur 5 sollen nunmehr Einzelheiten der Verschaltung der Batterie 4 erläutert werden.

Wie in Figur 5 ersichtlich, ist in Serie zu der Batterie 4 ein Element 12 verschaltet, dass die Funktion eines Linearreglers und/oder eines Schalters aufweisen kann. Beispielsweise kann dieses Element 12 ein Transistor sein. Weiterhin in Serie zu der Batterie 4 ist ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen. Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestroms auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Diese Tiefentladung kann mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

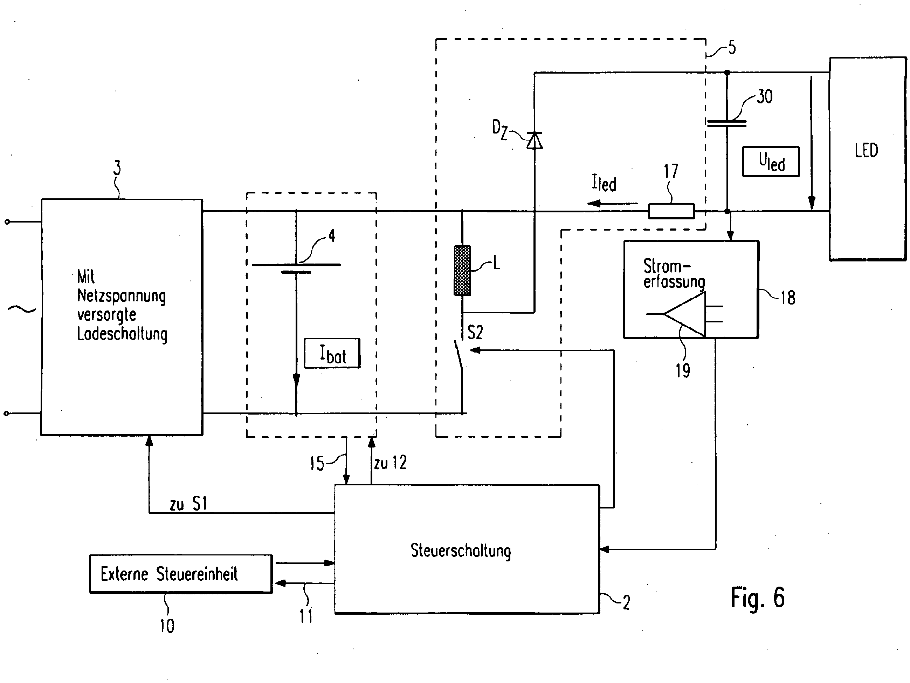

Figur 6 zeigt weitere Einzelheiten zur der erfindungsgemäßen LED-Treiberschaltung 5. Sämtliche Merkmale der Batterieschaltung von Figur 5 lassen sich im übrigen (wahlweise) mit der Schaltung von Figur 6 kombinieren.

Das Grundprinzip der Treiberschaltung 5 ist, wie bereits eingangs beschrieben, ein Schaltregler, bei dem bei geschlossenem Schalter S2 die Spule L aufmagnetisiert wird und sich die magnetische Energie bei wiedergeöffnetem Schalter S2 über einen Strompfad entlädt, der in Serie eine Zenerdiode, wenigstens eine LED sowie einen Ohmschen Widerstand 17 aufweist.

Bekanntlich ist es verhältnismäßig einfach, den Stromfluß durch die Dioden bei geschlossenem Schalter S2 zu messen.

Dagegen ist es etwas komplexer, den Stromfluß durch die LEDs bei geöffnetem Schalter S2 zu messen.

Zur Stromerfassung ist erfindungsgemäß der Widerstand 17 in Serie zu den LEDs geschaltet, wobei dieser Widerstand 17 ein Beispiel für ein Stromerfassungsmittel darstellt.

Eine Stromerfassungseinheit 18 kann beispielsweise einen Komparator 19 aufweisen.

Ein Stromerfassungssignal, d.h. ein den Strom durch die LEDs wiedergebendes Signal wird der Steuerschaltung 2 zugeführt. Die Steuerschaltung 2 kann das Schaltverhalten des Schalters S2 u.a. abhängig von dem Stromerfassungssignal ausgestalten.

Ein Kondensator 30 ist parallel zu der wenigstens einen LED geschaltet. Der Kondensator 30 glättet den LED-Strom, indem er Energie speichert und die Spannung über der wenigstens einen LED im wesentlichen konstant hält. Der Kondensator 30 ist dabei derart bemessen, dass weiterhin die Regelung der LED-Spannung möglich ist.

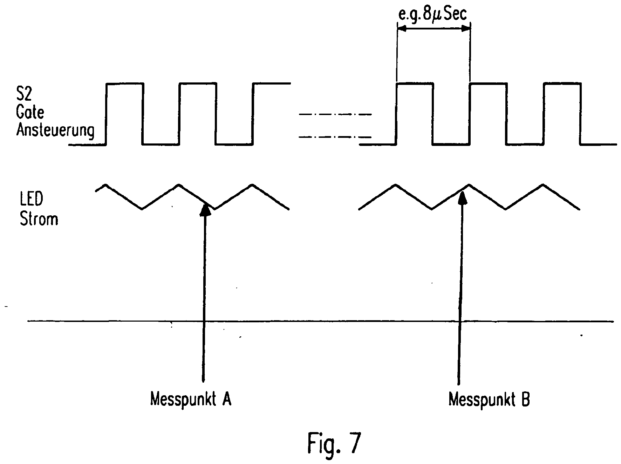

Figur 7 zeigt schematisch die Ansteuerung des Schalters S2, d.h. für den Fall, dass dieser Schalter als FET-Transistor ausgebildet ist, die Ansteuerung des Gate dieses Transistors in der Zusammenschau mit dem sich einstellenden Strom durch die LEDs. Während der Einschaltzeitdauer des Schalters S2 steigt der Strom durch die LEDs jeweils an. Während der Ausschaltzeitdauer sinkt er, getrieben durch die magnetische Energie der Spule L wieder ab. Somit ergibt sich ein um einen festen DC-Wert zickzackförmiger Verlauf des Stroms durch die LED. Die Stromerfassung soll nunmehr insbesondere den zeitlichen Mittelwert dieses Stroms ermitteln können, um somit beispielsweise die Leistung der LEDs entweder auf einen konstanten Wert oder auf einen frei wählbaren Wert (Dimming) wählen zu können.

Erfindungsgemäß ist vorgesehen, dass die Steuerschaltung 2, die das Schaltverhalten des Schalters S2 vorgibt und somit kennt, den Stromwert zu einem ersten Meßpunkt A sowie zu einem zweiten Meßpunkt B ermittelt, um daraus wiederum den Mittelwert zu bilden. Aus dem Mittelwert des Stromwerts zum Meßzeitpunkt A und Meßzeitpunkt B ergibt sich dann der zeitliche Mittelwert des LED-Stroms.

Der Meßpunkt A ist dabei so gewählt, dass er im Bereich des Endes des Ausschaltens des Schalters S2 liegt, während der Zeitpunkt B derart gewählt ist, dass er am Ende der Einschaltzeitdauer liegt.

Vorzugsweise wird für einen Messzyklus eine Messung mehrerer Minimal- und Maximalwerte ausgeführt. Somit lassen sich Ungenauigkeiten bezüglich des Messzeitpunkts herausmitteln. Für dieses Messprinzip sind die Messzeitpunkte mit der Taktung des Schalters S2 synchronisiert. Indessen kann es bei dieser Synchronisierung zu Ungenauigkeiten kommen, die bspw. durch die Verzögerungen von A/D-Wandlern begründet werden. Diese Ungenauigkeiten werden durch die Erfassung mehrere Werte herausgemittelt.

Somit lässt sich also der zeitliche Mittelwert des Stroms durch die LED erfassen, und die Steuereinheit 2 kann abhängig davon die Schaltfrequenz und/oder das Tastverhältnis des Schalters S2 einstellen. Zum Dimmen der LED kann die Steuereinheit 2 beispielsweise der hochfrequenten Taktung des Schalters S2 eine im Vergleich dazu niederfrequente Modulation beispielsweise in Form einer PWM-Modulation überlagern. Dies stellt eine alternative oder zusätzliche Möglichkeit zur Dimmung dar, da wie oben ausgeführt das Dimmen auch durch Änderung der hochfrequenten Taktung des Schalters S2 selbst erfolgen kann.

Erfindungsgemäß kann indessen das Dimmen der LED, d.h. die Einstellung des LED-Stroms auf einen definierten einwählbaren Wert, auch abhängig von anderen Größen erfolgen. Beispielsweise kann das Dimmen abhängig von einem erfassten Batterieentladestrom (siehe Schaltung von Figur 5) erfolgen, um somit die Batterielebenszeit zu verlängern.

Die Treiberschaltung 5 kann die LED auch dimmen, wenn der Mittelwert der Netzspannung, die die Ladeschaltung 3 versorgt, unter einen vorgegebenen Wert absinkt. Als weitere assistierende Maßnahme zur Verlängerung der Batterielebensdauer kann der Flyback-Konverter in der Ladeschaltung 3 in einen gepulsten Betrieb versetzt werden, so dass also der Flyback-Konverter assistierend zu der schwächer werdenden Batteriespannung die Treiberschaltung 5 versorgt.

Um eine Entladung der Batteriespannung zur Batterie 4 zu erfassen, kann die Batteriespannung erfasst werden (siehe wiederum Figur 5).

Weiterhin kann zusätzlich zu der LED-Stromerfassung eine LED-Spannungserfassung erfolgen.

Erfindungsgemäß kann eine Softstart-Funktion vorgesehen sein, bei der die Steuerschaltung 2 bei Inbetriebnahme zuerst einen verhältnismäßig geringen Teststrom durch die LED(s) fliessen lässt. Die Testmessung soll elektrische Parameter ermitteln, um herauszufinden, ob eine bzw. welche LED an die Treiberschaltung 5 angeschlossen ist. Beispielsweise kann ermittelt werden, welche LED-Spannung sich bei dem vorgegebenen Teststrom ergibt. Daraus können Rückschlüsse auf die Art (Farbe) und Anzahl der angeschlossenen LEDs getroffen werden, um wiederum abhängig davon den stationären Betriebsstrom angepasst an die ermittelten LED-Type zu regeln.

Grundsätzlich kann vorgesehen sein, dass die Steuereinheit 2 bei Inbetriebnahme den LED-Strom durch entsprechende Ansteuerung des Schalters S2 der Treiberschaltung 5 ausgehend von einem niedrigen Wert hin zu dem stationären Betriebswert für den LED-Strom erhöht.

Wenn das Anlegen des Teststroms das Fehlen oder einen Störfall einer LED ergibt, können automatisch in vorgegebenen Abständen eine Wiederholung des Anlegens der Testspannung erfolgen, bis das Einsetzen einer ordnungsgemäßen LED erfasst wird.

Wie gesagt kann der Strom durch die LED entweder durch Überlagerung einer niederfrequenten Modulation zu der hochfrequenten Taktung des Schalters S2 und/oder durch eine Veränderung (Tastverhältnis, Frequenz) der hochfrequenten Taktung selbst erfolgen.

## Patentansprüche

1. Schaltung zum Betreiben wenigstens einer LED, wobei die Schaltung aufweist:

     - eine Treiberschaltung (5) mit einer Spule (L) und einem mit der Spule in Serie geschalteten und hochfrequent getakteten Schalter (S2), wobei die Treiberschaltung (5) derart ausgestaltet ist, dass während einer Einschaltzeitdauer des Schalters (S2) die Spule (L) aufmagnetisiert wird und während einer Ausschaltzeitdauer des Schalters (S2) die Spule (L) über einen Strompfad, der die wenigstens eine LED enthält, entmagnetisiert wird und wobei die Treiberschaltung ausgestaltet ist, die wenigstens eine LED über den Strompfad zu speisen; **dadurch gekennzeichnet, dass** die Schaltung weiterhin aufweist:
     - ein in dem Strompfad geschaltetes Stromerfassungsmittel, wobei das Stromerfassungsmittel dazu ausgebildet ist, ein den Strom durch die wenigstens eine LED wiedergebendes Stromerfassungssignal zu erfassen und dieses Stromerfassungssignal einer Steuereinheit (2) zu liefern,

\- eine Steuereinheit (2) die dazu ausgebildet ist, den Wert des Stromerfassungssignals am Ende der Einschaltzeitdauer des Schalters (S2) sowie den Wert des Stromerfassungssignals am Ende der Ausschaltzeitdauer des Schalters (S2) zu ermitteln und daraus den zeitlichen Mittelwert des Stroms durch die wenigstens eine LED zu bilden.

2. Schaltung nach Anspruch 1,
bei der die Steuereinheit (2) dazu ausgebildet ist, die Schaltfrequenz und/oder das Tastverhältnis des Schalters (S2) abhängig wenigstens von dem erfassten/gemittelten zeitlichen Mittelwert des Stroms durch die LED einzustellen.

3. Schaltung nach Anspruch 1 oder 2,
bei der zum Dimmen der wenigstens einen LED die Steuereinheit (2) dazu ausgebildet ist, der hochfrequenten Taktung des Schalters (S2) eine im Vergleich dazu niederfrequente Modulation der Taktung des Schalters (S2) zu überlagern.

4. Schaltung nach Anspruch 3,
bei der die niederfrequente Modulation eine PWM-Modulation ist.

5. Schaltung nach einem der vorhergehenden Ansprüche, bei der die Treiberschaltung (5) ausgehend von einer AC-Netzspannung (Uin) versorgt ist.

6. Schaltung nach einem der vorhergehenden Ansprüche, bei der die Treiberschaltung (5) ausgehend von einer Batterie (4) versorgt ist.

7. Schaltung nach Anspruch 6, aufweisend eine Stromerfassungseinheit (13), die mit der Steuereinheit (2) funktionell verbunden ist und dazu ausgebildet ist, einen Entladestrom der Batterie (4) zu erfassen, wobei zur Regelung des Batterieentladestroms die Steuereinheit (2) dazu ausgelegt ist, den Strom durch die LED abhängig von dem erfassten Batterieentladestrom einzustellen.

8. Schaltung nach Anspruch 6 oder 7,
bei der die Batterie an eine mit Netzspannung (Uin) versorgte Ladeschaltung (3) verbunden ist.

9. Schaltung nach Anspruch 8,
bei der die Treiberschaltung (5) dazu ausgebildet ist, die wenigstens eine LED zu dimmen, wenn der durch die Steuereinheit (2) erfasste Mittelwert einer die Schaltung versorgenden Netzspannung (U) unter einen Schwellenwert absinkt.

10. Schaltung nach Anspruch 8 oder 9,
bei der die Ladeschaltung (3) einen Flyback-Konverter (T) aufweist.

11. Schaltung nach Anspruch 10,
bei der die Steuereinheit (2) dazu ausgebildet ist, den Flyback-Konverter (T) gepulst anzusteuern, wenn der durch die Steuereinheit (2) erfasste Mittelwert der Netzspannung (Uin) unter einen Schwellenwert absinkt.

12. Schaltung nach einem der Ansprüche 6-11,
weiterhin aufweisend eine Batteriespannung-Erfassungsschaltung.

13. Schaltung nach Anspruch 12,
bei der die Steuereinheit (2) dazu ausgebildet ist, den Strom durch die wenigstens eine LED abhängig von einem Ausgangssignal der Batteriespannung-Erfassungsschaltung einzustellen.

14. Schaltung nach Anprüch 7,
wobei die Stromerfassungseinheit (13) dazu ausgebildet ist, einen Ladestrom der Batterie (4) zu erfassen.

15. Schaltung nach einem der vorhergehenden Ansprüche,
bei der die Steuereinheit (2) dazu ausgebildet ist, die LED-Spannung zu erfassen.

16. Schaltung nach einer der vorhergehenden Ansprüche, bei der die Steuereinheit (2) dazu ausgebildet ist, bei Inbetriebnahme eine Testmessung elektrischer Parameter auszuführen, um herauszufinden ob eine bzw. welche LED an die Treiberschaltung (5) angeschlossen ist.

17. Schaltung nach Anspruch 16,
bei der die Steuereinheit (2) dazu ausgebildet ist, den Betriebsstrom durch die wenigstens eine LED abhängig von dem Ergebnis der Testmessung einzustellen.

18. Schaltung nach Anspruch 16 oder 17,
bei der die Testmessung in dem Anlegen eines verhältnismäßig kleinen Teststroms durch entsprechende Ansteuerung der Treiberschaltung (5) und dem Messen der sich ergebenden LED-Spannung besteht.

19. Schaltung nach einem der vorhergehenden Ansprüche,
bei der die Steuereinheit (2) dazu ausgebildet ist, bei Inbetriebnahme den Betriebsstrom, durch entsprechende Ansteuerung des Schalters (S2) der Treiberschaltung (5), von einem niedrigen Wert aus zu einem stationären Betriebswert zu erhöhen.

**20.** Verfahren zur Ermittlung des Stroms durch wenigstens eine LED, die durch eine Schaltung betrieben wird, wobei die Schaltung eine Treiberschaltung mit einer Spule (L) und einen mit der Spule in Serie geschalteten Schalter (S2) aufweist, wobei:

- während einer Einschaltzeitdauer des Schalters (S2) die Spule aufmagnetisiert wird und während einer Ausschaltzeitdauer des Schalters (S2) die Spule (L) über einen Strompfad, der die wenigstens eine LED enthält, entmagnetisiert wird,
- ein Strom durch den die wenigstens eine LED aufweisenden Strompfad gespeist wird, **dadurch gekennzeichnet, dass**
- ein in dem Strompfad geschaltetes Stromerfassungsmittel ein den Strom durch die wenigstens eine LED wiedergebendes Stromerfassungssignal erfasst,

wobei der Wert des Stromerfassungssignals am Ende der Einschaltzeitdauer des Schalters (S2) sowie der Wert des Stromerfassungssignals am Ende der Ausschaltzeitdauer des Schalters (S2) ermittelt wird, um daraus den zeitlichen Mittelwert des Stroms durch die wenigstens eine LED zu bilden.

**Claims**

**1.** Circuit for operating at least one LED, the circuit having:

- a driver circuit (5) with a coil (L) and a switch (S2), which is connected in series with the coil and is subject to radiofrequency clocking, the driver circuit (5) being configured such that, during a switch-on period of the switch (S2), the coil (L) is magnetized and, during a switch-off period of the switch (S2), the coil (L) is demagnetized via a current path which contains the at least one LED, and the driver circuit being configured to feed the at least one LED via the current path, **characterized in that** the circuit furthermore has:
- a current detection means, which is connected in the current path, the current detection means being designed to detect a current detection signal reproducing the current through the at least one LED and to provide this current detection signal to a control unit (2),
- a control unit (2) which is designed to determine the value of the current detection signal at the end of the switch-on period of the switch (S2) and the value of the current detection signal at the end of the switch-off period of the switch (S2) and from this to form the temporal mean value of the current through the at least one LED.

**2.** Circuit according to Claim 1, in which the control unit (2) is designed to adjust the switching frequency and/or the duty factor of the switch (S2) depending at least on the detected/averaged temporal mean value of the current through the LED.

**3.** Circuit according to Claim 1 or 2, in which, in order to dim the at least one LED, the control unit (2) is designed to superimpose on the radiofrequency clocking of the switch (S2) a low-frequency (in comparison to said radiofrequency clocking) modulation of the clocking of the switch (S2).

**4.** Circuit according to Claim 3, in which the low-frequency modulation is a PWM modulation.

**5.** Circuit according to one of the preceding claims, in which the driver circuit (5) is supplied with power from an AC system voltage (Uin).

**6.** Circuit according to one of the preceding claims, in which the driver circuit (5) is supplied with power from a battery (4).

**7.** Circuit according to Claim 6, having a current detection unit (13), which is functionally connected to the control unit (2) and is designed to detect a discharge current of the battery (4), the control unit (2) being designed to adjust the current through the LED depending on the detected battery discharge current in order to regulate the battery discharge current.

**8.** Circuit according to Claim 6 or 7, in which the battery is connected to a charging circuit (3) supplied with system voltage (Uin).

**9.** Circuit according to Claim 8, in which the driver circuit (5) is designed to dim the at least one LED when the mean value detected by the control unit (2) for a system voltage (U) supplying power to the circuit falls below a threshold value.

**10.** Circuit according to Claim 8 or 9, in which the charging circuit (3) has a flyback converter (T).

**11.** Circuit according to Claim 10, in which the control unit (2) is designed to drive the flyback converter (T) in pulsed fashion when the mean value for the system voltage (Uin) detected by the control unit (2) falls below a threshold value.

**12.** Circuit according to one of Claims 6-11, further having a battery voltage detection circuit.

**13.** Circuit according to Claim 12, in which the control unit (2) is designed to adjust the current through the at least one LED depending on an output signal of the battery voltage detection circuit.

**14.** Circuit according to Claim 7, the current detection unit (13) being designed to detect a charge current of the battery (4).

**15.** Circuit according to one of the preceding claims, in which the control unit (2) is designed to detect the LED voltage.

**16.** Circuit according to one of the preceding claims, in which the control unit (2) is designed to implement, when first brought into operation, a test measurement of electrical parameters in order to ascertain whether a or which LED is connected to the driver circuit (5).

**17.** Circuit according to Claim 16, in which the control unit (2) is designed to adjust the operating current through the at least one LED depending on the result of the test measurement.

**18.** Circuit according to Claim 16 or 17, in which the test measurement consists in applying a comparatively low test current by corresponding driving of the driver circuit (5) and in measuring the resultant LED voltage.

**19.** Circuit according to one of the preceding claims, in which the control unit (2) is designed to increase, when first brought into operation, the operating current from a low value to a steady-state operating value, by corresponding driving of the switch (S2) of the driver circuit (5).

**20.** Method for determining the current through at least one LED, which is operated by a circuit, the circuit having a driver circuit with a coil (L) and a switch (S2) which is connected in series with the coil, wherein:

- during a switch-on period of the switch (S2), the coil is magnetized and, during a switch-off period of the switch (S2), the coil (L) is demagnetized via a current path which contains the at least one LED,
- a current is fed through the current path having the at least one LED, **characterized in that**
- a current detection means, which is connected in the current path, detects a current detection signal which reproduces the current through the at least one LED,

the value of the current detection signal at the end of the switch-on period of the switch (S2) and the value of the current detection signal at the end of the switch-off period of the switch (S2) being determined in order to form from this the temporal mean value of the current through the at least one LED.

**Revendications**

**1.** Circuit destiné à faire fonctionner au moins une LED, le circuit comprenant :

- un circuit d'attaque (5) avec une bobine (L) et un commutateur (S2) connecté en série avec la bobine et cadencé à haute fréquence, le circuit d'attaque (5) étant agencé de telle sorte que pendant une durée de fermeture du commutateur (S2) la bobine (L) est magnétisée et pendant une durée d'ouverture du commutateur (S2) la bobine (L) est démagnétisée via un trajet de courant, qui comprend ladite au moins une LED, et le circuit d'attaque étant agencé de manière à alimenter ladite au moins une LED via le trajet de courant ;
**caractérisé en ce que** le circuit présente en outre :
- un moyen de détection de courant, qui est connecté dans le trajet de courant, le moyen de détection de courant étant agencé de manière à détecter un signal de détection de courant qui représente le courant à travers ladite au moins une LED, et à fournir ce signal de détection de courant à une unité de commande (2),
- une unité de commande (2) qui est agencée de manière à déterminer la valeur du signal de détection de courant à la fin de la durée de fermeture du commutateur (S2) ainsi que la valeur du signal de détection de courant à la fin de la durée d'ouverture du commutateur (S2), et à former à partir de celles-ci la valeur moyenne dans le temps du courant à travers ladite au moins une LED.

**2.** Circuit selon la revendication 1, dans lequel l'unité de commande (2) est agencée de manière à ajuster la fréquence de commutation et/ou le rapport cyclique du commutateur (S2) en fonction au moins de la valeur moyenne dans le temps détectée/moyennée du courant à travers la LED.

**3.** Circuit selon la revendication 1 ou 2, dans lequel, pour varier l'intensité lumineuse de ladite au moins une LED, l'unité de commande (2) est agencée de manière à superposer au cadencement à haute fréquence du commutateur (S2) une modulation, qui est par rapport à celui-ci à basse fréquence, du cadencement du commutateur (S2).

**4.** Circuit selon la revendication 3, dans lequel la modulation à basse fréquence est une modulation PWM.

**5.** Circuit selon l'une quelconque des revendications précédentes, dans lequel le circuit d'attaque (5) est alimenté à partir d'une tension de réseau alternative (Uin).

**6.** Circuit selon l'une quelconque des revendications précédentes, dans lequel le circuit d'attaque (5) est alimenté à partir d'un accumulateur (4).

**7.** Circuit selon la revendication 6, présentant une unité de détection de courant (13) qui est reliée de manière fonctionnelle à l'unité de commande (2) et qui est agencée de manière à détecter un courant de décharge de l'accumulateur (4), dans lequel, pour une régulation du courant de décharge d'accumulateur, l'unité de commande (2) est agencée de manière à ajuster le courant à travers la LED en fonction du courant de décharge d'accumulateur détecté.

**8.** Circuit selon la revendication 6 ou 7, dans lequel l'accumulateur est relié à un circuit de charge (3) alimenté par une tension de réseau (Uin)

**9.** Circuit selon la revendication 8, dans lequel le circuit d'attaque (5) est agencé de manière à varier l'intensité lumineuse de ladite au moins une LED lorsque la valeur moyenne, détectée par l'unité de commande (2), d'une tension de réseau (U) alimentant le circuit descend sous une valeur de seuil.

**10.** Circuit selon la revendication 8 ou 9, dans lequel le circuit de charge (3) présente un convertisseur Flyback (T).

**11.** Circuit selon la revendication 10, dans lequel l'unité de commande (2) est agencée de manière à commander par impulsions le convertisseur Flyback (T) lorsque la valeur moyenne, détectée par l'unité de commande (2), de la tension de réseau (Uin) descend sous une valeur de seuil.

**12.** Circuit selon l'une des revendications 6-11, présentant en outre un circuit de détection de tension d'accumulateur.

**13.** Circuit selon la revendication 12, dans lequel l'unité de commande (2) est agencée de manière à ajuster le courant à travers ladite au moins une LED en fonction d'un signal de sortie du circuit de détection de tension d'accumulateur.

**14.** Circuit selon la revendication 7, dans lequel l'unité de détection de courant (13) est agencée pour détecter un courant de charge de l'accumulateur (4).

**15.** Circuit selon l'une des revendications précédentes, dans lequel l'unité de commande (2) est agencée pour détecter la tension de LED.

**16.** Circuit selon l'une des revendications précédentes, dans lequel l'unité de commande (2) est agencée de manière à effectuer une mesure de test de paramètres électriques lors de la mise en marche, pour déterminer si une LED ou quelle LED est connectée au circuit d'attaque (5).

**17.** Circuit selon la revendication 16, dans lequel l'unité de commande (2) est agencée pour ajuster le courant de fonctionnement à travers ladite au moins une LED en fonction du résultat de la mesure de test.

**18.** Circuit selon la revendication 16 ou 17, dans lequel la mesure de test consiste à appliquer un courant de test relativement petit par une commande appropriée du circuit d'attaque (5), et à mesurer la tension de LED résultante.

**19.** Circuit selon l'une des revendications précédentes, dans lequel l'unité de commande (2) est agencée de manière à accroitre, lors de la mise en marche et par une commande appropriée du commutateur (S2) du circuit d'attaque (5), le courant de fonctionnement depuis une valeur basse jusqu'à une valeur de fonctionnement stationnaire.

**20.** Procédé destiné à déterminer le courant à travers au moins une LED, qui est actionnée par un circuit, le circuit présentant un circuit d'attaque avec une bobine (L) et un commutateur (S2) connecté en série avec la bobine, comprenant les étapes suivantes :

  - pendant une durée de fermeture du commutateur (S2), la bobine (L) est magnétisée, et pendant une durée d'ouverture du commutateur (S2) la bobine (L) est démagnétisée via un trajet de courant, qui comprend ladite au moins une LED,
  - un courant est acheminé via le trajet de courant présentant ladite au moins une LED,
  **caractérisé en ce que**
  - un moyen de détection de courant connecté dans le trajet de courant détecte un signal de détection de courant représentant le courant à travers ladite au moins une LED,

dans lequel la valeur du signal de détection du courant à la fin de la durée de fermeture du commutateur (S2) ainsi que la valeur du signal de détection du courant à la fin de la durée d'ouverture du commutateur (S2) est déterminée, de manière à former à partir de celles-ci la valeur moyenne dans le temps du courant à travers ladite au moins une LED.

Fig. 1

Fig. 2

Fig. 3

Fig. 4

Fig. 5

Fig. 6

S2
Gate
Ansteuerung

e.g. 8 μ Sec

LED
Strom

Messpunkt A

Messpunkt B

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2258571 A
- US 6858994 B2